# EUROPÄISCHE PATENTSCHRIFT

(11) **EP 3 759 378 B1**
(45) Veröffentlichungstag und Bekanntmachung des Hinweises auf die Patenterteilung: **23.02.2022**
(21) Anmeldenummer: 19700571.3
(22) Anmeldetag: 10.01.2019
(51) Int. Cl.: F16J 9/06

(54) **ABSTANDSFEDER FÜR EINEN DREITEILIGEN ÖLABSTREIFRING SOWIE DREITEILIGER ÖLABSTREIFRING MIT DIESER ABSTANDSFEDER**
SPACER SPRING FOR A THREE-PART OIL SCRAPER RING AND THREE-PART OIL SCRAPER RING HAVING SAID SPACER SPRING
RESSORT D'ÉCARTEMENT POUR UN SEGMENT RACLEUR D'HUILE EN TROIS PARTIES, AINSI QUE SEGMENT RACLEUR D'HUILE EN TROIS PARTIES COMPRENANT LEDIT RESSORT D'ÉCARTEMENT

(30) Priorität: 28.02.2018 DE 102018104594
(43) Veröffentlichungstag der Anmeldung: 06.01.2021
(73) Patentinhaber: Federal-Mogul Burscheid GmbH, 51399 Burscheid (DE)
(72) Erfinder: PELSOECZY, Laszlo, 51515 Kürten (DE); BÄRENREUTER, Dirk, 51519 Odenthal (DE)
(74) Vertreter: Kurig, Thomas
(86) Internationale Anmeldenummer: PCT/EP2019/050507
(87) Internationale Veröffentlichungsnummer: WO 2019/166144

(56) Entgegenhaltungen:
- FR-A- 1 267 207
- GB-A- 996 943

## Beschreibung

Die vorliegende Erfindung betrifft eine Abstandsfeder für einen dreiteiligen Ölabstreifring sowie einen Ölabstreifring mit einer solchen Abstandsfeder.

Dreiteilige Ölabstreifringe umfassen zwei dünne Abstreifringe, Stahlbandringe bzw. Rails oder Stahllamellen, die von einer Abstandsfeder in einem gewünschten axialen Abstand zueinander gehalten, wobei andererseits gleichzeitig die Rails mit ihren Laufflächen bzw. Abstreifstegen gegen eine Zylinderinnenwand gepresst werden.

Bei der Bauform der Feder von dreiteiligen Ölabstreifringen haben sich drei grundsätzliche Ausführungen etabliert, das VF-System, das MF-System und das SS50-System.

Bei dem VF - System ist eine Feder, aus einem geschlitzten Bandstahl U-förmig gebogen, deren Öffnung nach innen zeigt. Die Schenkelenden sind dabei in Axialrichtung nach außen gebogen, und können so hinter die Abstreifringe greifen und diese nach außen drücken. Der geschlitzte Bandstahl bildet eine mäanderförmige bzw. wellige Struktur, die es der Feder nach dem Biegen in die U-Form gestattet, Kräfte in Radialrichtung und Axialrichtung auszuüben.

Bei dem MF - System besteht die Feder aus einem axial bzw. in Axialrichtung gewellten Stahlband, das aus Chrom-Nickelstahl gefertigt sein kann. Die Feder wellt sich zwischen den beiden Ölabstreifringen und weist Vorsprünge auf, die auch hinter die Ölabstreifringe greifen, um diese nach außen zu drücken.

Das SS50 - System verwendet eine Feder, die im Gegensatz zur MF-Feder in Radialrichtung bzw. radial gewellt ist. Diese Feder bietet eine gute Elastizität in Radialrichtung, jedoch nur eine eingeschränkte Elastizität in Axialrichtung.

Ausführungen des MF - Systems weisen den Nachteil auf, dass insbesondere im Falle einer trapezförmigen Wellenstruktur der MF-Feder ein Zustand eintreten kann, bei dem die Feder sich in der Kolbenringnut verklemmt. Bei Motoren mit hohen Verdichtungsverhältnissen und hohen Brennraumdrücken kann ein sogenannter "Blowby" auftreten, bei dem heiße Gase aus dem Brennraum an den üblichen zwei oberen Kolbenringen vorbeiströmen und bis zum Ölabstreifring gelangen. Bei einer trapezförmigen Feder, (die im Aussehen einem Rechtecksignal mit beispielsweise 45° Flanken entspricht) kann es bei einer übermäßigen Erwärmung durch heiße Brennraumgase dazu kommen, dass sich die Feder ausdehnt und sowohl in Radialrichtung als auch in Axialrichtung verklemmt. Dieser Zustand sollte im Normalbetrieb nicht auftreten, kann jedoch vor Allem in seltenen Betriebszuständen zu einer übermäßigen Belastung der Feder und der Abstreifringe führen. Dies ist der Fall, wenn heiße Brenngase in die Nut des Ölabstreifrings gelangen und sich die MF-Expanderfeder bzw. MF-Federexpander bzw. ein MF-Mäanderfeder-Expander in Form eines Dreiecks- oder Trapezwelle thermisch ausdehnt. Die Feder dehnt sich dabei in Umfangsrichtung und in Axialrichtung aus. Die Feder kann in Axialrichtung nicht ausweichen und durch die schrägen Teile bzw. Flanken der Feder weicht die Feder in Axialrichtung aus. Dies ist solange möglich, bis die Höhe des Ölabstreifrings die Breite der Ölabstreifnut im Kolben übersteigt und die Feder und damit der Ölabstreifring sich in der Kolbenringnut und in Radialrichtung verklemmen. Eine Verklemmung in Radialrichtung führt zu einem erhöhten Verschleiß der Abstreifkanten der Abstreifringe. Eine Verklemmung in Axialrichtung führt zu einem erhöhten Verschleiß der Ölabstreifringnutflanken.

Bekannte MF-Federn bzw. Federn die bei mehrteiligen Ölabstreifringen verwendet werden können sind beispielsweise in den Patentanmeldungen mit den Veröffentlichungsnummern GB 996943 A, und FR 1267207 A beschrieben.

Die vorliegende Erfindung betrifft eine MF-Feder, die dazu ausgelegt ist, ein derartiges Verklemmen zu vermeiden.

Dieses Problem wird durch die Gegenstände der unabhängigen Ansprüche gelöst, bevorzugte Ausführungen sind in den abhängigen Ansprüchen beschrieben.

Es wird eine MF-Expanderfeder bzw. ein MF-Federexpander für einen dreiteiligen

Ölabstreifring, bereitgestellt. Die MF-Expanderfeder umfasst ein in Axialrichtung trapez- oder rauten-förmig gewelltes Stahlband. Die MF-Expanderfeder umfasst dabei Axialvorsprünge, die dazu bestimmt sind, in Radialrichtung von innen jeweils gegen einen oberen oder unteren Ölabstreifring anzuliegen, um diese nach außen gegen eine Zylinderinnenfläche zu drücken, obere ebene Abschnitte, die dazu bestimmt sind, in Axialrichtung an einem oberen Ölabstreifring eines dreiteiligen Ölabstreifrings anzuliegen, untere ebene Abschnitte, die dazu bestimmt sind, in Axialrichtung an einem unteren Ölabstreifring des dreiteiligen Ölabstreifrings anzuliegen, und Flankenabschnitte, die sich zwischen den oberen ebenen Abschnitten und den unteren ebenen Abschnitten erstrecken. Bei der MF-Expanderfeder bildet mindestens jeder zweite Flankenabschnitt mit den zugehörigen oberen oder unteren ebenen Abschnitten einen spitzen Winkel. Dieser Winkel betrifft hier den Winkel zwischen dem Flankenabschnitt und dem jeweiligen ebenen Abschnitt, und nicht einen Winkel, um den ein Stahlband gebogen wurde, um die Mäanderfeder zu bilden; dies gilt für alle Ausführungen, die einen Winkel α verwenden. Hier ist zumindest jede zweite Flanke der Feder entgegen der üblichen Richtung geneigt. Wenn sich diese Feder durch Blowby-Gase erhitzt, kann sie sowohl in Umfangsrichtung als auch in Axialrichtung einfedern. Eine Situation wie bei der herkömmlichen Feder, die sich in der Kolbenringnut verklemmt und in Umfangsrichtung verklemmt, wenn sie sich thermisch ausdehnt, kann nicht mehr auftreten.

Bei der erfindungsgemäß Ausführung der MF -Expanderfeder bildet jeder andere zweite Flankenabschnitt mit dem zugehörigen oberen oder unterem ebenen Abschnitt einen stumpfen Winkel. Dieses Merkmal betrifft dabei nicht unbedingt die End- bzw. Stoßabschnitte, mit denen sich die Enden der Federn berühren. Diese Ausführung entspricht eher einer rautenförmigen Wellung der Feder. Dabei kann diese immer in Axialrichtung zusammengedrückt werden und die Anteile mit spitzen Winkeln stellen eine Elastizität in Umfangsrichtung sicher.

Bei einer beispielhaften nicht erfindungsgemäßen Ausführung der MF-Expanderfeder bilden alle Flankenabschnitte mit dem zugehörigen oberen oder unterem ebenen Abschnitt einen spitzen Winkel. Dieses Merkmal betrifft dabei nicht unbedingt die End- bzw. Stoßabschnitte, mit denen sich die Enden der Federn berühren. Diese Ausführung betrifft eine trapezförmig gewellte Expanderfeder. Im Gegensatz zu der herkömmlichen Expanderfeder verringert sie bei einer Stauchung in Umfangsrichtung ihre Höhe und bei einer Stauchung in Axialrichtung verringert sie ihre Länge in Umfangsrichtung. Damit verhält sie sich genau entgegengesetzt zu der bisherigen Ausführung, die sich bei Erwärmung in der Kolbenringnut verklemmen kann.

Bei einer beispielhaften Ausführung der MF-Expanderfeder beträgt der spitze Winkel zwischen 85° und 70°, bevorzugt zwischen 82° und 73°, und weiter bevorzugt zwischen 79° und 76°. Diese Werte lassen momentan erwarten, dass bei einer gleichmäßigen Erwärmung eine stärkere Ausdehnung in einer Axialrichtung auftritt. Die spitzwinkligen Anteile der Flanken und eine geringere Ausdehnung in Umfangsrichtung bewirken, dass ein Teil der Ausdehnung ausgeglichen wird.

Bei einer zusätzlichen beispielhaften Ausführung der MF-Expanderfeder betragen die stumpfen Winkel zwischen 95° und 120°, bevorzugt zwischen 98° und 117°, und weiter bevorzugt zwischen 101° und 114°. Bei diesen Werten wird momentan eine besonders gute Wirkung der Feder erwartet.

Bei einer weiteren beispielhaften Ausführung der MF-Expanderfeder ist ein Betrag einer Differenz zwischen dem spitzen Winkel und 90° größer als ein Betrag einer Differenz jeweils zwischen den stumpfen Winkeln und 90°. Die spitzwinklig angeordneten Federflanken sind hier deutlich stärker geneigt bzw. flacher als die stumpfwinkligen Federflanken. In dieser Ausführung wird eine starke Überlappung der ebenen Anteile oder Stützflächen erzielt, was einen geringeren Verschleiß der Kontaktflächen zwischen Feder und Abstreifringen verspricht. Diese Ausführung entspricht einer Mäanderfeder bzw. einem Federexpander, der aussieht, als hätte man eine Reihe Z-Buchstaben ohne Abzusetzen dicht hintereinander geschrieben, wobei die Winkel in den Z-Buchstaben spitz sind, und die Winkel der Linien zu den ebenen Schenkeln stumpfe Winkel bilden.

Bei einer anderen beispielhaften Ausführung der MF-Expanderfeder beträgt der spitze Winkel zwischen 55° und 35°, bevorzugt zwischen 52° und 38°, und weiter bevorzugt zwischen 49° und 41°, wobei die stumpfen Winkel zwischen 105° und 120°, bevorzugt zwischen 108° und 117°, und weiter bevorzugt zwischen 111° und 114° betragen.

Gemäß einem weiteren Aspekt der MF-Expanderfeder wird eine andere, nicht erfindungsgemäße, Ausführung einer MF-Expanderfeder für einen dreiteiligen Ölabstreifring bereitgestellt. Die MF-Expanderfeder umfasst ein in Axialrichtung s-förmig gewelltes Stahlband. Die MF-Expanderfeder umfasst:
Axialvorsprünge, die dazu bestimmt sind, in Radialrichtung von innen jeweils gegen einen oberen oder unteren Ölabstreifring anzuliegen, um diese nach außen gegen eine Zylinderinnenfläche zu drücken,
obere ebene Abschnitte, die dazu bestimmt sind, in Axialrichtung an einem oberen Ölabstreifring eines dreiteiligen Ölabstreifrings anzuliegen, und untere ebene Abschnitte, die dazu bestimmt sind, in Axialrichtung an einem unteren Ölabstreifring des dreiteiligen Ölabstreifrings anzuliegen, und Flankenabschnitte, die sich zwischen den oberen ebenen Abschnitten und den unteren ebenen Abschnitten erstrecken.

Bei der MF-Expanderfeder ist mindestens jeder zweite Flankenabschnitt mit den zugehörigen oberen oder unteren ebenen Abschnitten mit einem Verrundungsradius gebogen, wobei die MF-Expanderfeder mindestens bei jedem zweiten Flankenabschnitt um mehr als 180° gegenüber den zugehörigen oberen oder unteren ebenen Abschnitten gebogen wurde. Die Expanderfeder ist also in einem Bogen gegen sich selbst zurückgebogen. Dies funktioniert nur, wenn die Biegeradien größer sind als eine axiale Höhe von Flankenabschnitten.

Der überstumpfe Winkel betrifft hier den Winkel, um den der Flankenabschnitt aus der Ebene der ebenen Abschnitte herausgebogen wurde. Da der Flankenabschnitt in einem Radius gebogen ist, ist der Winkel im Prinzip auch der, den der Flankenabschnitt und der ebene Abschnitt bildet, wobei jedoch dieser Winkel nicht leicht erkennbar ist. Die 6

Bezeichnung des Winkels wurde abweichend von den oben genannten gewählt, da dieser hier klarer verständlich ist, dies gilt für alle Ausführungen, die einen Winkel γ verwenden.

Bei den herkömmlichen Ausführungen der MF-Expanderfeder wurde das Federblech weniger als 90° gebogen, um eine Art Schlangenlinie zu bilden.

Bei der vorstehenden nicht erfindungsgemäßen Ausführung wurde bei der MF-Expanderfeder das Federblech bei zumindest jeder zweiten Federflanke weiter als 90° gebogen, um eine Art Trapezlinie oder Rautenlinie zu bilden.

Bei der vorliegenden nicht erfindungsgemäßen Ausführung wurde die MF-Expanderfeder weiter als 180° gebogen, was jedoch nur möglich ist, wenn die Biegestelle einen entsprechend großen Biegeradius aufweist. Daraus ergibt sich eine Art S-förmig gewellte Expanderfeder, bei der Teile der Flanken wieder zurück zu den ebenen Abschnitten laufen, von denen sie weggebogen sind. Die Flankenabschnitte sind nicht nur in einem stumpfen Winkel, sondern bereits zu einem überstumpfen Winkel bezüglich der Richtung der geraden bzw. ebenen Abschnitte gebogen worden.

Bei einer beispielhaften Ausführung der MF-Expanderfeder sind alle Flankenabschnitte mit den zugehörigen oberen oder unteren ebenen Abschnitten mit einem Verrundungsradius gebogen, wobei die MF-Expanderfeder mindestens bei jedem zweiten Flankenabschnitt um mehr als 180° gegenüber den zugehörigen oberen oder unteren ebenen Abschnitten gebogen wurde. Auch diese Einschränkung bezieht sich nicht auf die Endabschnitte der MF-Feder, die sich in einem eingebauten Zustand berühren sollen.

Bei einer weiteren beispielhaften Ausführung der MF-Expanderfeder ist jeder zweite Flankenabschnitt um einen Winkel 145° und 100° gebogen, bevorzugt zwischen 140° und 105°, und weiter bevorzugt zwischen 135° und 110°. Diese Werte lassen momentan erwarten, dass bei einer gleichmäßigen Erwärmung eine stärkere Ausdehnung in einer Axialrichtung auftritt, wobei der zurücklaufende Teil der Feder bei einer Erwärmung eine Gesamthöhe bzw. einen Gesamthöhenzuwachs der Feder verringert.

Bei einer anderen beispielhaften Ausführung der MF-Expanderfeder beträgt ein Verrundungsradius bei jedem zweiten Flankenabschnitt oder bei allen Flankenabschnitten zwischen 5/6 und 1/4, bevorzugt zwischen 4/5 und 3/5, und weiter bevorzugt zwischen 3/4 und 4/6 eines Abstandes des unteren zum oberen Abstreifrings.

Bei einer zusätzlichen beispielhaften Ausführung der MF-Expanderfeder bildet jeder andere zweite Flankenabschnitt mit dem zugehörigen oberen oder unteren ebenen Abschnitt einen stumpfen Winkel.

Gemäß einem anderen Aspekt der vorliegenden Erfindung wird ein dreiteiliger Ölabstreifring mit einer Expanderfeder und einem oberen und einem unteren Ölabstreifring bereitgestellt, wobei die MF-Expanderfeder den oberen Ölabstreifring nach oben drückt und den unteren Ölabsreifring nach unten drückt und beide Ölabstreifringe nach außen drücken.

Im Folgenden wird die vorliegende Erfindung anhand von verschiedenen schematischen Figuren weiter verdeutlicht. Alle Figuren zeigen MF-Federn mit angedeuteten Abstreifringen in einer abgewickelten Ansicht von außen.
Figur 1 zeigt einen herkömmlichen dreiteiligen Ölabstreifring.
Figuren 2A und 2B stellen verschiedene Ausführungen von zum Stand der Technik gehörenden dreiteiligen Ölabstreifringen dar, bei denen alle Flanken einen spitzen Winkel zu den jeweils flachen ebenen Abschnitten bilden, mit denen die Feder an den Ölabstreifringen anliegt.
Figuren 3A und 3B zeigen verschiedene Ausführungen von erfindungsgemäßen dreiteiligen Ölabstreifringen, bei denen jede eine zweite Flanke einen spitzen Winkel zu den jeweils flachen ebenen Abschnitten bildet, und jede der anderen zweiten Flanken einen stumpfen Winkel zu den flachen ebenen Abschnitten bildet, mit denen die Feder an den Ölabstreifringen anliegt.
Figuren 4A und 4B stellen verschiedene Ausführungen von zum Stand der Technik gehörenden dreiteiligen Ölabstreifringen dar, bei denen mindestens jede zweite Flanke gegenüber den flachen ebenen Abschnitten mit einem großen Verrundungsradius um einen überstumpfen Winkel gebogen wurde.

Im Folgenden werden sowohl in der Beschreibung als auch in den Figuren gleiche oder ähnliche Bezugszeichen verwendet, um auf gleiche oder ähnliche Elemente und Komponenten Bezug zu nehmen.

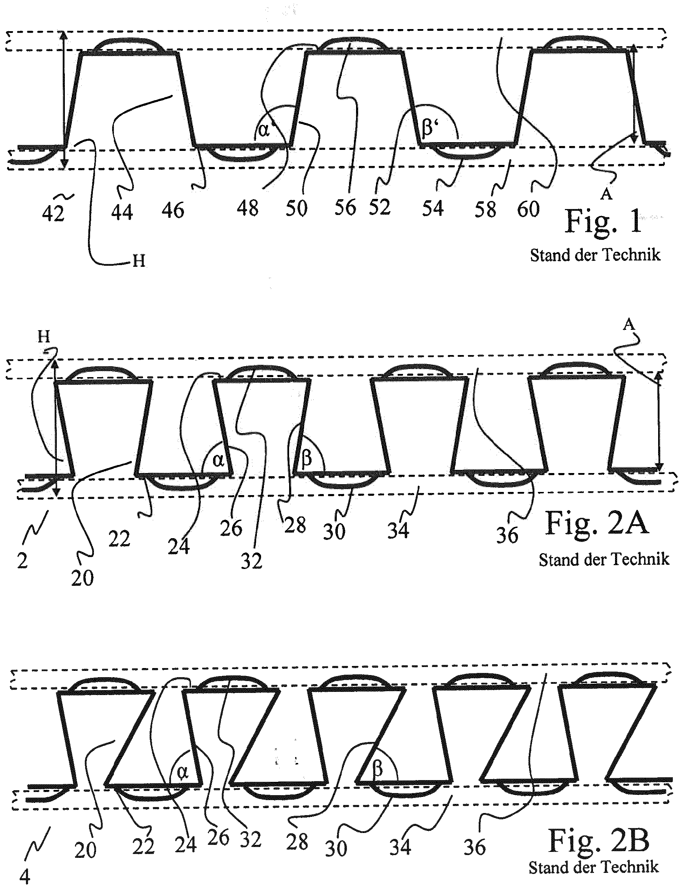

Figur 1 zeigt einen herkömmlichen dreiteiligen Ölabstreifring 42. Hier ist ein herkömmlicher MF-Mäanderfeder-Expander 44 zwischen einem oberen Abstreifring 60 und einem unteren Abstreifring 58 angeordnet. Der MF-Mäanderfeder-Expander 44 drückt dabei den unteren und den oberen Abstreifring 58, 60 nach außen. Der MF-Mäanderfeder-Expander 44 umfasst dabei untere ebene Abschnitte 46 und obere ebene Abschnitte 48, mit denen der MF-Mäanderfeder-Expander 44 in Axialrichtung an den Abstreifringen 58, 60 anliegt. Der MF-Mäanderfeder-Expander 44 soll dabei die Abstreifringe nicht nach unten und oben an jeweilige Flanken einer Kolbenringnut drücken, da dies die Beweglichkeit des Kolbenrings in Umfangsrichtung herabsetzen würde. Die ebenen Abschnitte sind über jeweilige Flankenabschnitte miteinander verbunden. Ausgehend von rechts nach links verläuft jeder zweite Flankenabschnitt 50 von oben nach unten und jeder andere zweite Flankenabschnitt 52 von unten nach oben. Jeder zweite Flankenabschnitt 50 bildet mit jedem angrenzenden ebenen Abschnitt einen stumpfen Winkel α' und jeder andere zweite Flankenabschnitt 52 bildet mit jedem angrenzenden ebenen Abschnitt einen stumpfen Winkel β'. Bei der herkömmlichen Ausführung sind die Flankenabschnitte symmetrisch angeordnet und weisen jeweils gleiche stumpfe Winkel α' und β' auf. Die unteren ebenen Abschnitte 46 sind mit unteren Vorsprüngen 54 bzw. Axialvorsprüngen 54 versehen, die an einer in Radialrichtung liegenden Innenseite der MF- Mäanderfeder-Expanders 44 in Axialrichtung über diese herausstehen. Die oberen ebenen Abschnitte 48 sind mit oberen Vorsprüngen 56 bzw. oberen Axial-Vorsprüngen 56 versehen, die an einer in Radialrichtung liegenden Innenseite der MF-Mäanderfeder-Expanders 44 in Axialrichtung über dieser herausstehen. Die Vorsprünge greifen dabei jeweils hinter den unteren und oberen Abstreifring und können ihn so nach außen in Richtung einer Zylinderinnenwand drücken. Im Falle von Blowby können heiße Gase bis zu dem MF- Mäanderfeder-Expander 44 vordringen und diesen bis weit über eine vorgesehene Betriebstemperatur erhitzen. Wenn sich der MF- Mäanderfeder-Expanders 44 in Umfangsrichtung ausdehnt, kann es dazu kommen, dass sich der MF- Mäanderfeder-Expanders 44 in Umfangsrichtung und in Axialrichtung in dem Spalt zwischen den Abstreifringen verklemmt, und diese mit einer zu großen Kraft nach außen gegen eine Zylinderinnenwand und gleichzeitig mit einer zu großen Kraft gegen die Ölabstreifkolbenringnutenflanken drückt, was zu einem zu starken Verschleiß und sogar zu einer Beschädigung der Komponenten führen kann. Der Abstand A bezeichnet den Abstand zwischen den Abstreifringen bzw. die Dicke des MF- Mäanderfeder-Expanders 44 ohne die Vorsprünge. Die Höhe H bezeichnet eine Gesamthöhe des dreiteiligen Ölabstreifrings, wobei diese Höhe H kleiner sein sollte als eine entsprechende Breite einer Ölabstreifringnut in einem Kolben, damit sich dieser noch in Umfangsrichtung bewegen kann. Die Abstände bzw. Bezugszeichen A und H gelten im Folgenden für alle Abstreifringe und Figuren, auch wenn diese nicht in allen Figuren eingetragen wurden.

Figuren 2A und 2B stellen verschiedene Ausführungen von zum Stand der Technik gehörenden dreiteiligen Ölabstreifringen dar, bei denen alle Flanken einen spitzen Winkel zu den jeweils flachen ebenen Abschnitten bilden, mit denen die Feder an den Ölabstreifringen anliegt.

In Figur 2A ist ein dreiteiliger Öl-Abstreif-Ring 2 des Standes der Technik mit einem Mäanderfeder-Expander (MFE) dargestellt, der zwischen den ebenen Abschnitten und den Flankenabschnitten stumpfe Winkel α und β aufweist. In Figur 2A ist zu erkennen, dass im Gegensatz zu dem herkömmlichen MF- Mäanderfeder-Expander 44 der Figur 1 die Flankenabschnitte 26 und 28 in einer anderen Richtung geneigt sind und mit den jeweiligen unterer und oberen ebenen Abschnitten 22, 24 jeweils einen stumpfen Winkel bilden. In Figur 2A ist zu erkennen, dass im Gegensatz zu dem herkömmlichen MF- Mäanderfeder-Expander 44 der Figur 1 die Flankenabschnitte 26 und 28 in einer anderen Richtung geneigt sind und mit den jeweiligen unterer und oberen ebenen Abschnitten 22, 24 jeweils einen spitzen Winkel bilden. Die jeweils zweiten Flankenabschnitte 26 und die jeweiligen unteren und oberen ebenen Abschnitte 22, 24 bilden jeweils einen spitzen Winkel α. Die jeweils anderen zweiten Flankenabschnitte 28 und die jeweiligen unteren und oberen ebenen Abschnitte 22, 24 bilden hier jeweils einen ebenfalls spitzen Winkel β.

Auch in der Figur 2A ist ein MF-Mäanderfeder-Expander 20 des Standes der Technik zwischen einem unteren Abstreifring 34 und einem oberen Abstreifring 36 angeordnet. Der MF-Mäanderfeder-Expander 44 drückt dabei den unteren und den oberen Abstreifring 34, 36 nach außen bzw. hält diese in dem definierten Abstand A. Der MF-Mäanderfeder-Expander 20 umfasst dabei untere, ebene Abschnitte 22 und obere ebene Abschnitte 24, mit denen der MF-Mäanderfeder-Expander 20 in Axialrichtung an den Abstreifringen 34, 36 anliegt. Der MF-Mäanderfeder-Expander 20 soll dabei die Abstreifringe nicht nach unten und oben an jeweilige Flanken einer Kolbenringnut drücken, da dies die Beweglichkeit des Kolbenrings in Umfangsrichtung herabsetzen würde. Die ebenen Abschnitte 22, 24 sind über jeweilige Flankenabschnitte 26, 28 miteinander verbunden. Ausgehend von rechts nach links verläuft jeder zweite Flankenabschnitt 28 von oben nach unten und jeder andere zweite Flankenabschnitt 26 von unten nach oben. Bei dieser Ausführung sind die Flankenabschnitte symmetrisch angeordnet und weisen jeweils gleiche spitze Winkel zwischen den Flanken und den ebenen Abschnitten auf. Die unteren ebenen Abschnitte 22 sind mit unteren Vorsprüngen 30 bzw. unteren Axialvorsprüngen 30 versehen, die an einer in Radialrichtung liegenden Innenseite der MF- Mäanderfeder-Expanders 20 in Axialrichtung über dieser herausstehen. Die oberen ebenen Abschnitte 24 sind mit oberen Vorsprüngen 32 bzw. oberen Axialvorsprüngen 32 versehen, die an einer in Radialrichtung liegenden Innenseite der MF-Mäanderfeder-Expanders 20 in Axialrichtung über dieser herausstehen. Die Vorsprünge greifen wie in der Figur 1 dabei jeweils hinter den unteren und oberen Abstreifring 34, 36 und können ihn so nach außen in Richtung einer Zylinderinnenwand drücken. Im Falle von Blowby können heiße Gase bis zu dem MF- Mäanderfeder-Expander 20 vordringen und diesen bis weit über eine vorgesehene Betriebstemperatur erhitzen. Wenn sich der MF-Mäanderfeder-Expanders 20 durch solch eine übermäßige Erwärmung in Umfangsrichtung ausdehnt, kann sich der MF-Mäanderfeder-Expander 20 nicht in dem Spalt zwischen den Abstreifringen verklemmen, da sich die Flanken bei einer entsprechenden Ausdehnung stärker neigen können, wobei die Höhe A des MF-Mäanderfeder-Expanders 20 verringert wird. Wenn der MF-Mäanderfeder-Expander 20 in Umfangsrichtung zusammengedrückt wird, verringert sich seine Höhe und es kann zu keinem Verklemmen kommen. Durch diese Ausführung können selbst bei einer übermäßigen Erwärmung durch Blowby große Kräfte nach außen gegen eine Zylinderinnenwand und gegen die Ölabstreifkolbenringnutenflanken vermieden werden. Das vorliegende Design kann somit einen übermäßigen Verschleiß verhindern.

Figur 2B zeigt einen dreiteiligen Ölabstreifring 4 des Standes der Technik mit einem MF-Mäanderfeder-Expander 20, der mit zwei verschiedenen spitzen Winkeln versehen ist. Jeder zweite Flankenabschnitt 26 ist steiler geneigt als jeder andere zweite Flankenabschnitt 28. Der Ölabstreifring der Figur 2B verwendet ein leicht abweichendes Design gegenüber dem der Figur 2A. Die Figur 2A zeigt einen sehr symmetrischen Aufbau des MF-Mäanderfeder-Expanders 20, wobei die Flankenabschnitte 26, 28 die im Wesentlichen gleichen spitzen Winkel α und β zu den ebenen Abschnitten 22, 24 bilden. Im Gegensatz dazu weist jeder zweite Flankenabschnitt 26 einen anderen spitzen Winkel α zu den jeweiligen ebenen Abschnitten 22, 24 auf als der entsprechenden Winkel β zwischen jeder der jeweils anderen zweiten Flankenabschnitte 28 und den jeweiligen ebenen Abschnitten 22, 24. In dieser Ausführung ist die Feder in Umfangsrichtung und in Axialrichtung elastischer, da jeder zweite Flankenabschnitt 26 steiler ist und so eine größere Elastizität in Umfangsrichtung bereitstellt und jeder andere zweite Flankenabschnitt 28 flacher ist und so eine größere Elastizität in Axialrichtung bereitstellt. Die anderen Komponenten entsprechen der Offenbarung der Figur 2A, und werden hier nicht noch einmal redundant wiederholt.

Die Figuren 2A und 2B zeigen dabei "trapezoid gewellte" MF-Mäanderfeder-Expander 20.

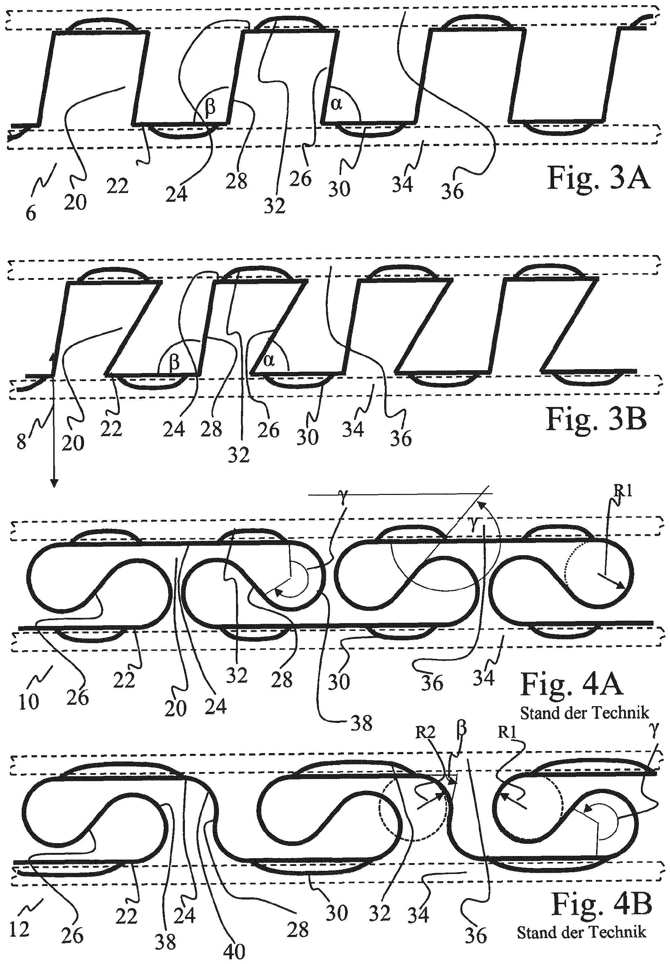

Figuren 3A und 3B zeigen verschiedene Ausführungen von erfindungsgemäßen dreiteiligen Ölabstreifringen, bei denen jede eine zweite Flanke einen spitzen Winkel α zu den jeweils flachen ebenen Abschnitten bildet und jede der anderen zweiten Flanken einen stumpfen Winkel β zu den flachen ebenen Abschnitten bildet, mit denen die Feder an den Ölabstreifringen anliegt.

Figur 3A zeigt einen erfindungsgemäßen dreiteiliger Ölabstreifring 4 mit einem MF-Mäanderfeder-Expander 20, der mit stumpfen und spitzen Winkeln versehen ist. In der Abwicklung ist jeder zweite Flankenabschnitt 26 mit einem spitzen Winkel α zu den ebenen Abschnitten im Wesentlichen parallel oder parallel zu jedem anderen zweiten Flankenabschnitt 28. In der Abwicklung der Feder bildet jeder zweite Flankenabschnitt 26 einen spitzen Winkel β mit den ebenen Abschnitten. Jeder zweite Flankenabschnitt 26 ist mit einem spitzen Winkel α in der Abwicklung im Wesentlichen parallel oder parallel zu jedem anderen zweiten Flankenabschnitt 28. Jeder andere zweite Flankenabschnitt 28 bildet mit den entsprechenden ebenen Abschnitten einen stumpfen Winkel β. Da jeder zweite Flankenabschnitt 26 mit jedem anderen zweiten Flankenabschnitt 28 im Wesentlichen parallel oder parallel ist ergänzen sich die Winkel α und β zu 180°.

Die Figur 3A kann als Ölabstreifring mit "rautenförmig gewelltem" MF-Mäanderfeder-Expander 20 bezeichnet werden. Hier kann die Elastizität in Umfangsrichtung und die Elastizität in Axialrichtung des Expanders 20 relativ einfach über die Steigung der Flanken des MF-Mäanderfeder-Expanders 20 eingestellt werden. Flachere Flanken erzeugen dabei eine größere Elastizität in Axialrichtung und eine geringere Elastizität in Umfangsrichtung. Steilere Flanken erzeugen dabei eine geringere Elastizität in Axialrichtung und eine höhere Elastizität in Umfangsrichtung. Auch wenn jeder andere zweite Flankenabschnitt 28 stumpfwinklig ausgeführt ist, kann sich der MF-Mäanderfeder-Expander 20 nicht in einer Ölabstreifringnut eines Kolbens verklemmen, da jeder zweite Flankenabschnitt 26 spitzwinklig ausgeführt ist und eine Elastizität in Umfangs- und Axialrichtung auch bei einer übermäßigen Erwärmung durch Blowbygase sicherstellt.

Figur 3B zeigt einen erfindungsgemäßen dreiteiliger Ölabstreifring 4 der wie der in Figur 3A mit einem MF-Mäanderfeder-Expander 20 versehen ist, welcher mit stumpfen und spitzen Winkeln versehen ist. Im Gegensatz zu der Ausführung der Figur 3A ist hier jeder zweite Flankenabschnitt 26 mit einem spitzen Winkel α in der Abwicklung nicht-parallel zu jedem anderen zweiten Flankenabschnitt 28 mit einem stumpfen Winkel β ausgeführt. Daher ist die Figur 3B auch als Ölabstreifring mit "trapezoid gewelltem" MF-Mäanderfeder-Expander 20 zu bezeichnen. Obwohl er eigentlich eine Abwandlung der Ausführungsform von Figur 3A ist, und technisch dieser näher steht.

Hier kann die Elastizität in Umfangsrichtung relativ unabhängig von der Elastizität in Axialrichtung des Expanders 20 eingestellt werden. Die Elastizität in Umfangsrichtung wird hauptsächlich durch die steiler dargestellten stumpfwinkligen Flanken 28 bestimmt. Die Elastizität in Axialrichtung wird hauptsächlich durch die steiler dargestellten spitzwinkligen Flanken 26 bestimmt. Je nach Wahl der entsprechenden Flankensteilheiten der spitz- (jede zweiten) bzw. stumpfwinklingen (jede andere zweiten) Flanken 26, 28 können die gewünschten Elastizitäten erreicht werden. Auch dieser MF-Mäanderfeder-Expander 20 kann sich nicht in einer Ölabstreifringnut eines Kolbens verklemmen, da jeder zweite Flankenabschnitt 26 spitzwinklig ausgeführt ist und eine Elastizität in Umfangs- und Axialrichtung auch bei einer übermäßigen Erwärmung durch Blowbygase sicherstellt.

Figuren 4A und 4B stellen verschiedene Ausführungen von dreiteiligen Ölabstreifringen des Standes der Technik dar, bei denen mindestens jede zweite Flanke gegenüber den flachen ebenen Abschnitten mit einem großen Verrundungsradius um einen überstumpfen Winkel γ gebogen wurde.

In Figur 4A weist der dreiteilige Ölabstreifring 10 des Standes der Techik nur Flanken 26, 28 auf, die gegenüber den flachen ebenen Abschnitten 22, 24 mit einem großen Verrundungsradius um einen überstumpfen Winkel γ gebogen wurden. Der Verrundungsradius R1 ist dabei mindestens halb so groß wie der Abstand A der Abstreifringe 34, 36. Die Verrundungen erstrecken sich dabei über einen Winkelbereich von mehr als 180°, sodass die Flanken oder zumindest jede zweite der Flanken in eine entgegengesetzte Richtung verlaufen, nämlich wieder auf den ebenen Abschnitt zu, von dem die Flanke aus dem Metallband gebogen wurde. Hier wird viel Material für die Flanken und die Verrundungen mit dem Radius R1 verwendet, sodass eine erhebliche Elastizität in Umfangsrichtung und Axialrichtung erreicht werden kann. Auch wenn das Design im Prinzip ein ähnliches Verhalten zeigen sollte wie im Falle der herkömmlichen Expanderfeder 42 von Figur 1, kann sich der MF-Mäanderfeder-Expander 20 auch bei einer Überhitzung nicht in der Ölabstreifkolbenringnut verklemmen, da die gesamte Struktur viel weicher ist als bei der herkömmlichen Feder, wobei vor allem die Verrundungsbereiche 38 erheblich zu dieser Elastizität beitragen.

Figuren 4B zeigt einen dreiteiligen Ölabstreifring 12 des Standes der Technik mit einem MF-Mäanderfeder-Expander 20, dessen Übergänge bei jedem zweiten Flankenabschnitt 26 mit Krümmungsradien zu überstumpfen Winkeln γ gebogen wurden. Ein Teil der Ausführung ist somit bereits durch die Figur 4A offenbart. Die anderen zweiten Flankenabschnitte 28 sind hier sehr viel kürzer ausgeführt und können auch sehr viel kleinere Verrundungsradien R2 aufweisen. Die anderen zweiten Flankenabschnitte 28 können mit den jeweils ebenen Abschnitten einen stumpfen oder bevorzugt einen spitzen Winkel β bilden. Hier können die anderen zweiten Flankenabschnitte 28 eine Elastizität in Axialrichtung deutlich erhöhen. Eine Elastizität jedes zweiten Flankenabschnitts 26 stellt dabei den Hauptteil einer Elastizität in Umfangsrichtung bereit.

Die Ausführungen der Figuren 4A und 4B weisen zudem einen Vorteil auf, dass eine Elastizität in Axialrichtung nichtlinear ausgeführt werden kann. Sobald der obere Abstreifring den Federexpander 20 soweit zusammendrückt, dass der Abstand A zwischen den Abstreifringen so klein wird wie ein Außendurchmesser der überstumpf gebogenen Verrundungen, erhöht sich die Federkonstante in Axialrichtung sehr stark. Es können so bei wenig Blowby geringe Kräfte eingesezt werden, um ein Axialspiel des Ölabstreifrings zu minimieren und im Falle eines starken Blowbys, biespielsweise bei Kaltstart oder Einlaufbedingungen, kann eine Mindesthöhe des Ölabstreifrings immer sichergestellt werden, ohne die Mäanderfeder zu überlasten.

### Bezugszeichenliste

- 2: Dreiteiliger Öl-Abstreif-Ring mit Mäanderfeder-Expander (MFE) stumpfwinklig
- 4: 3-tlg. Ölring mit MFE mit zwei verschiedenen spitzen Winkeln
- 6: 3-tlg. Ölring mit MFE mit zwei verschiedenen spitzen Winkeln
- 8: Erfindungsgemäßer 3-tlg. Ölring mit MFE mit spitzen und stumpfen Winkeln
- 10: 3-tlg. Ölring mit MFE mit Krümmungsradien und überstumpf gebogenen Flankenabschnitten
- 12: dreiteiliger Ölabstreifring mit Mäanderfeder-Expander-Feder mit Krümmungsradien und überstumpfen gebogenen und spitz gebogenen Winkeln
- 20: MF-Mäanderfeder-Expander bzw. MF-Expander(feder)
- 22: unterer ebener Abschnitt
- 24: oberer ebener Abschnitt
- 26: jeder zweite Flankenabschnitt 2, 4, 6, 8...
- 28: jeder andere zweite Flankenabschnitt 1, 3, 5, 7...
- 30: unterer Vorsprung
- 32: oberer Vorsprung
- 34: unterer Abstreifring
- 36: oberer Abstreifring
- 38: Verrundung am überstumpfen Winkel
- 48: Verrundung am spitzem oder stumpfen Winkel
- 42: herkömmlicher dreiteiliger Ölabstreifring
- 44: herkömmliche MF-Mäanderfeder-Expander
- 46: unterer ebener Abschnitt
- 48: oberer ebener Abschnitt
- 50: jeder zweite Flankenabschnitt
- 52: jeder zweite andere Flankenabschnitt
- 54: unterer Vorsprung
- 56: oberer Vorsprung
- 58: unterer Abstreifring
- 60: oberer Abstreifring
- R1: Verrundungsradius mit überstumpfen Winkel
- R2: Verrundungsradius mit spitzem Winkel
- A: Abstand zwischen unterem und oberem Ölabstreifring
- H: Höhe des dreiteiligen Öl-Abstreif-Rings
- α': herkömmlicher stumpfer Winkel zwischen einem ebenen Abschnitt und jedem zweiten Flankenabschnitte
- β': herkömmlicher stumpfer Winkel zwischen einem ebenen Abschnitt und einem der jeden anderen zweiten Flankenabschnitte
- α: spitzer Winkel zwischen einem ebenen Abschnitt und einem der jeden zweiten Flankenabschnitte
- ß: spitzer oder stumpfer Winkel zwischen einem ebenen Abschnitt und einem der jeden anderen zweiten Flankenabschnitte
- γ: überstumpfer Winkel, um den ein Flankenabschnitt aus einem ebenen Abschnitt gebogen ist

## Patentansprüche

1. MF-Expanderfeder (20) für einen dreiteiligen Ölabstreifring (2, 4, 6, 8), umfassend ein in Axialrichtung trapez- oder rautenförmig gewelltes Stahlband, wobei die MF-Expanderfeder (20)
Axial-Vorsprünge (30, 32) aufweist, die dazu bestimmt sind, in Radialrichtung von innen jeweils gegen einen oberen oder unteren Abstreifring (34, 36) anzuliegen, um diese nach außen gegen eine Zylinderinnenfläche zu drücken, obere ebene Abschnitte (24) umfasst, die dazu bestimmt sind, in Axialrichtung an einem oberen Abstreifring (34, 36) eines dreiteiligen Ölabstreifrings (2, 4, 6, 8) anzuliegen, untere ebene Abschnitte (22) umfasst, die dazu bestimmt
sind, in Axialrichtung an einem unteren Abstreifring (34) des dreiteiligen Ölabstreifrings (2, 4, 6, 8) anzuliegen, und Flankenabschnitte (26, 28) umfasst, die sich zwischen den oberen ebenen Abschnitten (24) und den unteren ebenen Abschnitten (22) erstrecken,
**dadurch gekennzeichnet, dass**
mindestens jeder zweite Flankenabschnitt (26) mit den zugehörigen oberen oder unteren ebenen Abschnitten (22, 24) einen spitzen Winkel (α) bildet, und
dass jeder andere zweite Flankenabschnitt (28) mit dem zugehörigen oberen oder unteren ebenen Abschnitt (24, 22) einen stumpfen Winkel (ß) bildet.

2. MF-Expanderfeder (20) für einen dreiteiligen Ölabstreifring (2, 4, 6, 8) nach Anspruch 1, wobei der spitze Winkel (α, β) zwischen 85° und 70°, bevorzugt zwischen 82° und 73°, und weiter bevorzugt zwischen 79° und 76° liegen.

3. MF-Expanderfeder (20) für einen dreiteiligen Ölabstreifring (6, 8) nach Anspruch 1 oder 2, wobei die stumpfen Winkel (β) zwischen 95° und 120° , bevorzugt zwischen 98° und 117°, und weiter bevorzugt zwischen 101° und 114° liegen.

4. MF-Expanderfeder (20) für einen dreiteiligen Ölabstreifring (4, 8) nach einem der vorstehenden Ansprüche, wobei ein Betrag einer Differenz zwischen dem spitzen Winkel (α) und 90° größer ist als ein Betrag einer Differenz jeweils zwischen den stumpfen Winkeln (β) und 90°.

5. MF-Expanderfeder (20) für einen dreiteiligen Ölabstreifring nach einem der vorstehenden Ansprüche, wobei die spitzen Winkel (α, β) zwischen 55° und 35° , bevorzugt zwischen 52° und 38°, und weiter bevorzugt zwischen 49° und 41° liegen, und wobei die stumpfen Winkel (β) zwischen 105° und 120°, bevorzugt zwischen 108° und 117°, und weiter bevorzugt zwischen 111° und 114° liegen.

6. Dreiteiliger Ölabstreifring (2, 4, 6, 8, 10, 12) mit einer Expanderfeder (20) gemäß einem der vorstehenden Ansprüche und einem oberen und einem unteren Abstreifring (34, 36), wobei die MF-Expanderfeder (20) den oberen Abstreifring (36) nach oben und den unteren Absreifring (34) nach unten abstützt und beide Abstreifringe (34, 36) nach außen drückt.

## Claims

1. An MF expander spring (20) for a three-part oil scraper ring (2, 4, 6, 8), comprising a steel band, which is corrugated in a trapezoidal or diamond-shaped manner in axial direction, wherein the MF expander spring (20)
has axial protrusions (30, 32), which are intended to abut in each case against an upper or lower oil scraper ring (34, 36) from the inside in radial direction, in order to press said axial protrusions outwards against an inner cylinder surface,
comprises upper flat sections (24), which are intended to abut against an upper scraper ring (34, 36) of a three-part oil scraper ring (2, 4, 6, 8) in axial direction,
comprises lower flat sections (22), which are intended to abut against a lower scraper ring (34) of the three-part oil scraper ring (2, 4, 6, 8) in axial direction, and
comprises flank sections (26, 28), which extend between the upper flat sections (24) and the lower flat sections (22),
**characterized in that**
at least every second flank section (26) forms an acute angle (α) with the associated upper or lower flat sections (22, 24), and that every other second flank section (28) forms an obtuse angle (β) with the associated upper or lower flat section (24, 22).

2. The MF expander spring (20) for a three-part oil scraper ring (2, 4, 6, 8) according to claim 1, wherein the acute angle (α, β) are between 85 ° and 70 °, preferably between 82 ° and 73 °, and more preferably between 79 ° and 76 °.

3. The MF expander spring (20) for a three-part oil scraper ring (6, 8) according to claim 1, wherein the obtuse angles (β) are between 95 ° and 120 °, preferably between 98 ° and 117 °, and more preferably between 101 ° and 114 °.

4. The MF expander spring (20) for a three-part oil scraper ring (4, 8) according to one of the preceding claims, wherein an amount of a difference between the acute angle (α) and 90 ° is larger than an amount of a difference between the acute angles (β) and 90 ° in each case.

5. The MF expander spring (20) for a three-part oil scraper ring according to one of the preceding claims, wherein the acute angles (α, β) are between 55 ° and 35 °, preferably between 52 ° and 38 °, and more preferably between 49 ° and 41 °, wherein the obtuse angles (β) are between 105 ° and 120 °, preferably between 108 ° and 117 °, and more preferably between 111 ° and 114 °.

6. A three-part oil scraper ring (2, 4, 6, 8, 10, 12) having an expander spring (20) according to one of the preceding claims and an upper and a lower scraper ring (34, 36), wherein the MF expander spring (20) supports the upper scraper ring (36) upwards and the lower scraper ring (34) downwards, and pushes both scraper rings (34, 36) outwards.

## Revendications

1. Ressort d'expansion MF (20) pour un anneau racleur d'huile en trois parties (2, 4, 6, 8),
comprenant une bande d'acier ondulée en forme de trapèze ou de diamant dans la direction axiale, le ressort d'expansion MF (20)
présentant des saillies axiales (30, 32) destinées à venir en appui dans la direction radiale depuis l'intérieur respectivement contre un anneau racleur supérieur ou inférieur (34, 36), de façon à les plaquer vers l'extérieur contre une surface intérieure d'un cylindre, comprenant des parties plates supérieures (24) destinées à venir en appui dans la direction axiale contre un anneau racleur supérieur (34, 36) d'un anneau racleur d'huile en trois parties (2, 4, 6, 8), des parties planes inférieures (22) étant destinées à venir dans la direction axiale en appui contre un anneau racleur inférieur (34) de l'anneau racleur d'huile en trois parties (2, 4, 6, 8), et comprenant des parties de flanc (26, 28) s'étendant entre les parties planes supérieures (24) et les parties planes inférieures (22),
**caractérisé en ce que**
au moins chaque deuxième partie de flanc (26) forme un angle aigu (α) avec les parties planes supérieures ou inférieures (22, 24) associées, et **en ce que** chaque autre deuxième partie de flanc (28) forme un angle obtus (β) avec la partie plane supérieure ou inférieure (24, 22) associée.

2. Ressort d'expansion MF (20) pour un anneau racleur d'huile en trois parties (2, 4, 6, 8) selon la revendication 1, dans lequel l'angle aigu (α, β) est compris entre 85° et 70°, de préférence entre 82° et 73°, et de façon encore préférée entre 79° et 76°.

3. Ressort d'expansion MF (20) pour un anneau racleur d'huile en trois parties (6, 8) selon la revendication 1 ou la revendication 2, dans lequel les angles obtus (β) sont compris entre 95° et 120°, de préférence entre 98° et 117°, et de façon encore préférée entre 101° et 114°.

4. Ressort d'expansion MF (20) pour un anneau racleur d'huile en trois parties (4, 8) selon l'une quelconque des revendications précédentes, dans lequel une quantité d'une différence entre l'angle aigu (α) et 90° est supérieure à une quantité d'une différence entre chacun des angles obtus (β) et 90°.

5. Ressort d'expansion MF (20) pour un anneau racleur d'huile en trois parties selon l'une quelconque des revendications précédentes, dans lequel les angles aigus (α, β) sont compris entre 55° et 35°, de préférence entre 52° et 38°, et de façon encore préférée entre 49° et 41°, et dans lequel les angles obtus (β) sont compris entre 105° et 120°, de préférence entre 108° et 117°, et de façon encore préférée entre 111° et 114°.

6. Anneau de raclage d'huile en trois parties (2, 4, 6, 8, 10, 12) comprenant un ressort d'expansion (20) selon l'une quelconque des revendications précédentes et un anneau racleur supérieur et inférieur (34, 36), le ressort d'expansion MF (20) supportant l'anneau racleur supérieur (36) vers le haut et l'anneau racleur inférieur (34) vers le bas et pressant les deux anneaux racleurs (34, 36) vers l'extérieur.
